# EUROPEAN PATENT SPECIFICATION

(11) **EP 2 412 429 B1**
(45) Date of publication and mention of the grant of the patent: **03.08.2016**
(21) Application number: 10755388.5
(22) Date of filing: 23.03.2010
(51) Int. Cl.: F16H 1/14, B01F 7/00, B01F 7/16

(54) **GEARING FOR PAINT STIRRING RACK USING BEVEL GEARS**
GETRIEBE FÜR FARBUMRÜHRGESTELL MIT KEGELZAHNRÄDERN
ENGRENAGE POUR AGITATEUR DE PEINTURE À CRÉMAILLÈRE UTILISANT DES ENGRENAGES CONIQUES

(30) Priority: 23.03.2009 CN 200910064436
(43) Date of publication of application: 01.02.2012
(73) Proprietor: Shen, Ruhua, Henan 450042 (CN)
(72) Inventor: HUANG, Song, Henan 450012 (CN); TANG, Shuangfeng, Henan 450007 (CN); LIU, Zhicheng, Henan 450000 (CN); TANG, Lixin, Henan 450000 (CN)
(74) Representative: Potter Clarkson LLP
(86) International application number: PCT/CN2010/000359
(87) International publication number: WO 2010/108388

(56) References cited:
- CN-A- 101 502 769
- CN-Y- 2 263 233
- CN-Y- 2 263 233
- CN-Y- 201 395 013
- US-A- 5 947 598
- US-A- 5 947 598

## Description

### FIELD OF THE INVENTION

The present invention relates to a stirring rack of tinting machines suitable for color matching and paint stirring in the vehicle maintenance industry, especially relates to a separable bevel gearing device of the stirring rack.

### BACKGROUND OF THE INVENTION

Currently, in the vehicle maintenance industry, there is a strict and accurate requirement for the paint color as to the spray painting and repairing of the paint color on the automobile outer casing surface. To ensure the desired color-matching paint uniformly and no color cast in the original bucket, the paint bucket shall be located on the stirring rack and mixed once in a while. In general, a plurality of paint buckets are located on one stirring rack, each of them is connected with the transmission gear of the stirring rack, and the transmission gear is connected to the main drive device driven by a motor. In turn the stirring paddle within the buckets is driven by the transmission gear to mix the paints in the buckets.

U.S Patent No. 5,947,598 has disclosed a paint stirring device, which is driven by means of an outer teeth belt with better engagement and disengagement performances. However, for this outer teeth belt configuration, the engaged teeth may drop out during the transmission and the cost is high. Furthermore, the outer teeth belt shall be tightened periodically to ensure a proper tension of the outer teeth belt. Otherwise, the teeth belt will slip and thus cannot transfer the stirring force normally.

CN 2 263 233 Y discloses a bevel gearing device for a paint-stirring rack according to the preamble of claim 1, the device includes a gear bracket, a transverse drive shaft, a first bevel gear, a vertical rotational shaft, a second bevel gear and a driving plate fixed on the bottom of the vertical rotational shaft; a fork is driven by the drive plate to mix the paints in the bucket. The connecting configuration between the bevel gearing device and the stirring paddle is complex and typically comprises such parts as the drive plate and fork, etc. As a result, the stirring rack is greater in height and thus occupies a larger space. Meanwhile, the package and transport costs are also increased. In addition, two engaged bevel gears of the above mentioned bevel gearing device are fixed in the position prior to the operation of the equipment, and there needs an accurate position control between the two gears. This is because of a higher requirement for the installation position of the conventional bevel gearing pairs in the mechanical design and installment, such that the three-dimensional installation positions of the engaged gears in the gear bracket should reach a desired accuracy. Thus, the bevel gearing pairs, especially the bevel gearing pairs for smooth transmission and small noise, require a pair of fine-manufactured bevel gears being installed at the accurate engagement position. Furthermore, the relative three-dimensional position accuracy of two bevel gears shall be finely adjusted to ensure the accurate engagement of the gears. In other words, the back cones of the gears shall be levelled and a certain gear backlash shall be ensured. When installing the bevel gears, a pair of gears to be engaged are generally installed and fixed in the proper position, then the transmission or motive force is loaded on the bevel gears. The assembly accuracy is hard to be ensured, especially when a driven gear is not specially made for a certain pair but randomly matches with one of the bevel gears. Usually, the user is not allowed to plug a bevel gear in a rotating bevel gear from the lateral of the latter for engaging and rotating with, which will result in heavy gear grinding or gear collision, etc.

### SUMMARY OF THE INVENTION

In light of the problems discussed above, the object of the present invention is to provide a separable bevel gearing device for the stirring rack of the tinting machine with characteristics of simple structure, stable transmission performance, user friendliness and cost-effectiveness. Moreover, a smooth engagement or disengagement of the bevel gearing device can be achieved during the running or stopping of the stirring rack.

Accordingly, the present invention provides a bevel gearing device for the stirring rack of tinting machine, which comprises a gear bracket fixedly mounted on the stirring rack; a horizontal drive shaft rotationally mounted on the gear bracket; a first bevel gear fixedly mounted on the horizontal drive shaft adjacent to a side of the gear bracket ; a vertical rotational shaft with a second bevel gear fixedly mounted on its upper end and a stirring paddle mounted on its lower end, said paddle is placed in a paint bucket; wherein there an open guide slot is provided at the bottom of the gear bracket, the guide slot includes a first segment extending perpendicularly to the horizontal drive shaft and a second segment extending towards the first bevel gear, an angle between the first and second segment is 180°≥α≥160°, and the size of guide slot is designed to slidably receive the vertical rotational shaft and let the latter in position at the innermost part of the guide slot, such that the second bevel gear is releasably engaged with the first bevel gear, the rotation direction of the first bevel gear may be selected such that it can drive the second bevel gear to rotate into the innermost part of the guide slot during the operation of the stirring rack of tinting machine. Further, at least one of the first and second bevel gears is made of plastic material.

Additionally, during the operation of the stirring rack, i.e. during stirring the paints in the paint bucket, the rotation direction of the first bevel gear should be selected such that it can drive the second bevel gear to rotate inward, in other words, the teeth on the lower part of the first bevel gear moves backwards when viewing from the front of stirring rack. As such, during the rotation of the first bevel gear, the second bevel gear will be inserted more easily, and the inserted second bevel gear driven by the first bevel gear will always be in the proper engagement position and not slip out. More advantageously, in this configuration, the first and the second bevel gears may be disengaged during the stirring to take off a desired paint bucket.

In this present invention, the guide slot of such a configuration may firstly make the vertical rotational shaft be inserted perpendicular to the horizontal shaft along the first segment of the guide slot, shortly before the second bevel gear contacts with the first bevel gear, the moving direction of the vertical rotational shaft is transferred to a direction along the second segment of the guide slot towards the first bevel gear. By means of this inserting manner, there will not appear such problems as heavy gear grinding or gear collision when the second bevel gear is inserted into the first bevel gear, therefore the second bevel gear is inserted easily. Furthermore, the innermost part the guide slot is preferably configured such that the central line thereof is overlapped completely with the axis of the vertical rotational shaft when the first and the second bevel gears is engaged. Advantageously, the width of the guide slot may be selected to achieve a loose fit between the guide slot and the vertical rotational shaft, such configuration not only make the vertical rotational shaft to be inserted easily, but also ensure application safety.

According to a preferable aspect of the present invention, both of the first and second bevel gears are made of plastic material. Replacing the metal bevel gear with the plastic bevel gear may not only reduce the accuracy requirement for assembling position, but also reduces the noise of the bevel gear pairs during operation. Moreover, the anti-abrasion effects are achieved without the lubrication between the two plastic gears. More advantageously, in order to improve the wear resistance of the plastic bevel gears, the plastic material of the bevel gears is mixed with anti-attrition substance such as molybdenum disulfide etc. to decrease the friction factor of the gears.

According to a preferable aspect of the present invention, the angle between the first and second segments of the guide slot is 170°≥α≥160°, whereby the insertion and engagement of the bevel gears is easier than hitherto. In addition, for facilitating the insertion of the bevel gears, the first and second bevel gears are configured such that the minimum value of gear backlash thereof increases along with the increasing angle α, and the first and second bevel gears have a modulus m=1.5∼4, the minimum value of gear backlash is in the range of 0mm∼0.3mm, said value of gear backlash is about two times or more of gear backlash in the bevel gears with higher accuracy in the prior art. Preferably, the minimum value of gear backlash is 0mm, if α=160°; the minimum value of gear backlash is 0.3 mm, if α=180°.

In the present invention, the bevel gearing device is preferably provided with a reducer, by which the rotation speed of the horizontal drive shaft may be maintained in the range of 60∼95 rpm. Under this speed, the thermal deformation caused by the friction of the two bevel gears will be prevented and the running noise is relatively lower. However, one skilled in the art will appreciate that the separable bevel gearing device of the present invention may also have a higher rotation speed according to the material of the bevel gears, but this will increase manufacturing cost accordingly.

In a preferable aspect of the present invention, a stirring paddle is installed on the vertical rotational shaft slidably, thus in case there are less paints in the bucket, the issues of hanging the bucket in the air or swaying due to the lifting force caused by the paddle are solved.. However, one skilled in the art will understand that other proper ways in the art also can be used to avoid such problems.

Moreover, in the present invention, the gear bracket is preferably made of plastic material, and the horizontal drive shaft and vertical rotational shaft are preferably made of metal material. In this way, a desired strength of drive shaft is not only be ensured, but also the friction factor between the metal shaft and the gear bracket is decreased.

According to one aspect of the present invention, the vertical rotational shaft is designed to be cylindrical, and the cylindrical structure of vertical rotational shaft facilitates the insertion of the vertical rotational shaft with the second bevel gear. For the convenience of installation, the vertical rotational shaft may be comprised of two segments, which are connected together for example by thread, as well as other suitable means.

The separable bevel gearing device in the present invention solves the problem of teeth collision during the insertion and pull-out of a bevel gear while ensuring the accuracy of the insertion position for the bevel gear to meet the requirement. In addition, the insertion is user friendly since it could be done at any time as desired. Moreover, the separating configuration of the bevel gears may decrease the overall height of the stirring rack effectively, and thus the package and transport costs are reduced accordingly. Furthermore, by selecting the rotational direction of the horizontal drive shaft properly during the stirring, the first bevel gear will bring the vertical rotational shaft into the correct position in the slot, and keep the vertical rotational shaft in right position during the rotation. Thus the gearing of the bevel gears is very reliable and the disengagement of the bevel gears will not appear during the stirring. More advantageously, the gear clearance of such bevel gearing device do not need to be adjusted for a long time.

### BRIEF DESCRIPTION OF THE DRAWINGS

Preferred embodiments of the present invention will now be described herein below by way of example and with reference to the accompanying drawings, in which:
Figure 1 is a top view of the bevel gearing device according to the present invention, from which a second bevel gear and a vertical rotational shaft are removed;
Figure 2 is a perspective view of the bevel gearing device in Figure 1, from which the second bevel gear and the vertical rotational shaft are removed;
Figure 3 is a front view of the bevel gearing device according to the present invention;
Figure 4 is a perspective view of the bevel gearing device in Figure 3;
Figure 5 is an assembly illustration of the bevel gearing device and the bucket lids;
Figure 6 is an assembly illustration of the bevel gearing device and the buckets;
Figure 7 is a schematic view shows a stirring rack using the bevel gearing device according to the present invention.

### List of reference numerals:

1-Gear bracket; 2-Horizontal drive shaft; 3-First bevel gear; 4-Vertical rotational shaft; 5-Second bevel gear; 6-Bucket lid; 7-Stirring paddle; 8-Guide slot; 8a-First segment of guide slot; 8b-Second segment of guide slot; 9-Location hole; 10-Bucket; 11-Stirring rack; 12-Supporting Shelf; 13-Locating pin.

### DETAILED DESCRIPTION OF DEPICTED EMBODIMENTS

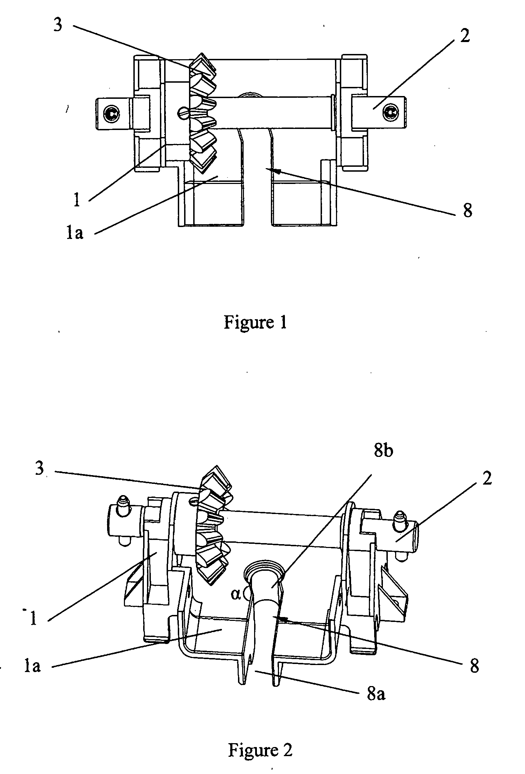

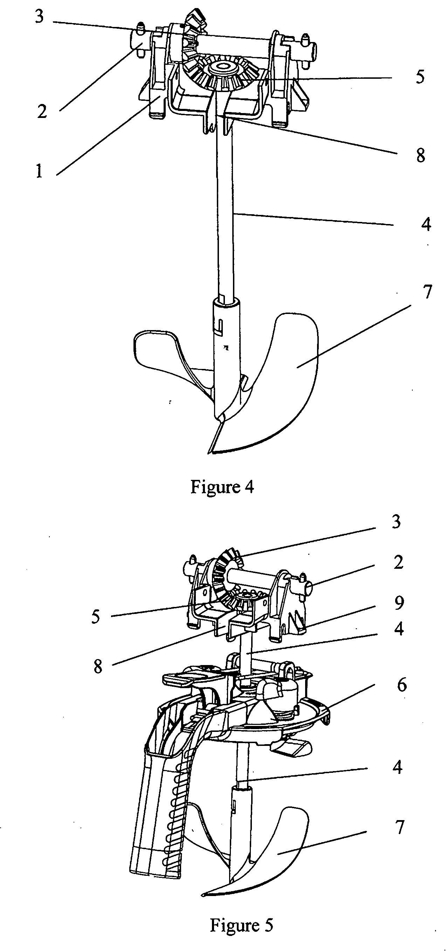

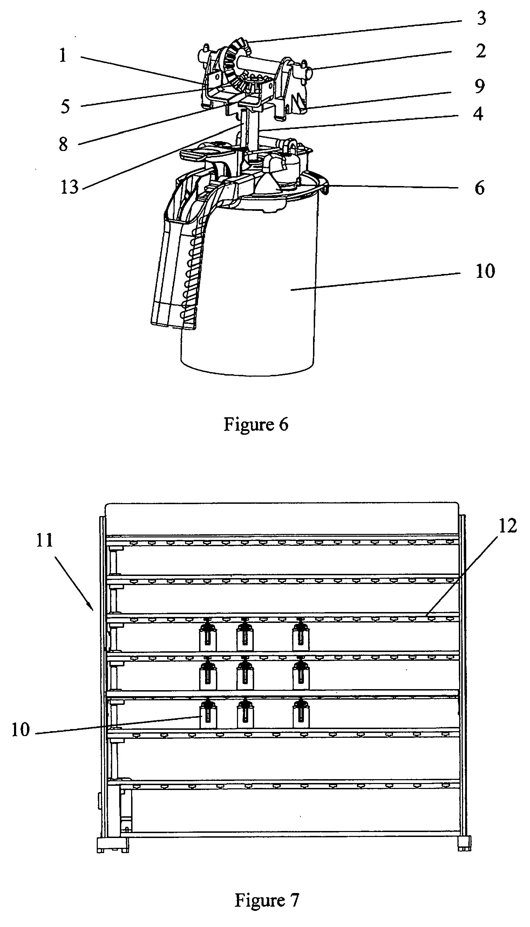

Figures 1-6 illustrates an embodiment of a separable bevel gearing device of the present invention suitable for the stirring rack 11 of tinting Machine. As shown in these figures, the bevel gearing device includes a gear bracket 1, which is mounted fixedly on the stirring rack 11 by means of location holes 9 therein (see Figure 5). A horizontal drive shaft 2 driven by the driving device may be mounted rotatably in openings in the gear bracket 1. The length of the horizontal drive shaft 2 (here only schematically shown) is almost the same with the width of the stirring rack 11. The drive shaft may extend cross several gear brackets 1 spaced apart the same distance on the stirring rack. For simplicity, only one group of drive bevel gears is described herein. A first bevel gear 3 is installed fixedly on the horizontal drive shaft 2 at its side adjacent to the gear bracket 1, such that the first bevel gear 3 rotates simultaneously with the horizontal drive shaft 2. The bevel gearing device further includes a vertical rotational shaft 4 which is perpendicular to the supporting shelf 12 after installation. The vertical rotational shaft 4 is provided with a second bevel gear 5 mounted fixedly its upper end and a stirring paddle 7 on its lower end. Actually, the vertical rotational shaft 4 shall extend through a central hole in the bucket lid 6, and then the stirring paddle 7 is installed. As shown in Figures 5 and 6, the bucket lid 6 is located on a shaft lever of the vertical rotational shaft 4 between the second bevel gear 4 and the stirring paddle 7.

According to the invention and as shown in Figures 1 and 2, a guide plate is provided at the bottom of the gear bracket 1 preferably made of the plastic material, and the guide plate has an open guide shot 8, the guide slot 8 includes a first segment 8a extending perpendicular to the horizontal drive shaft 2 and a second segment 8b extending towards the first bevel gear 3, wherein an angle between the first and second segment is 180°≥α≥160° (i.e. the guide slot may be a straight slot), preferably 170°≥α≥160°. Meanwhile, the width of guide slot 8 may be designed to slidably receive the vertical rotational shaft 4, and hold the shaft 4 at the innermost part of the guide slot 8 in position, such that the vertical rotational shaft 4 installed rotatably in the bucket lid 6 and the second bevel gear 5 fixed on the rotational shaft 4 may be easily inserted into the guide slot 8, and thus the second bevel gear 5 is able to releasably engaged with the first bevel gear 3.

In the present invention, the width of the guide slot 8 should be selected to achieve a loose fit between the guide slot and the vertical rotational shaft 4. Particularly, in a embodiment, the diameter of the vertical rotational shaft 4 is e.g. 8mm, the width of the first segment 8a of the guide slot is 9mm, and the width of the second segment 8b of the guide slot is 8.4mm, such configuration not only makes the vertical rotational shaft 4 inserted easily, but also facilitates to keep it in position, thus ensures the operation safety. Furthermore, the two bevel gears are configured such that the minimum value of gear backlash thereof increases along with the increasing angle α. Preferably, the first and second bevel gears are designed to have a modulus m=1.5∼4, and the minimum value of gear backlash is in the range of 0mm∼.3mm when assembling. For example, the minimum value of gear backlash is 0mm, if α=160°; the minimum value of gear backlash is 0.3 mm, if α=180°. Such values of gear backlash can not only achieve normal engagement of the separated bevel gears, but also increase their working life.

As mentioned above, during insertion of a paint bucket 10, the guide slot 8 is configured such that the vertical rotational shaft 4 is firstly inserted perpendicular to the horizontal drive shaft fixed with the first bevel gear 3, before the second bevel gear is to contact with the first bevel gear, the insertion direction of the vertical rotational shaft is changed to a direction along the second segment 8b of the guide slot, which is towards and adjacent to the first bevel gear 3. In this case, the paint bucket may be inserted and pulled out easily when the stirring rack stopping. The second bevel gear can be surely inserted into a proper position to engage with the first bevel gear during stirring rack running. In addition, there will not appear problem of unwilling disengagement during the stirring process.

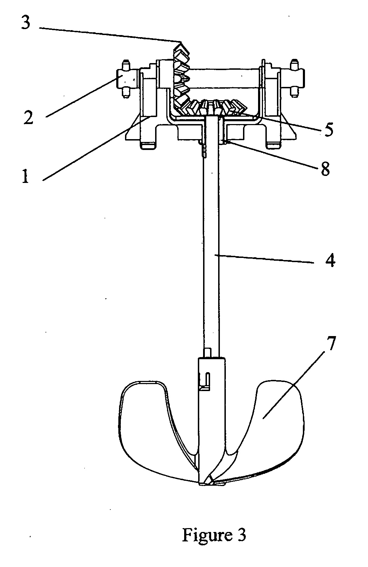

Specifically, during the operation process of the stirring rack, i.e. when stirring the paints, the rotation direction of the horizontal drive shaft 2 and the first bevel gear 3 thereon should be selected such that the first bevel gear may drive the second bevel gear 5 to rotate inward, as shown in Figure.3, the rotation direction of the second bevel gear is clock-wise. Therefore, when the bucket with the vertical rotational shaft 4 and the second bevel gear 5 is inserted into the open guide slot 8, the rotation of the first bevel gear 3 will drive the second bevel gear 5 into the innermost part of the guide slot 8 and maintain the vertical rotational shaft 4 against the innermost part of the second segment 8a of the guide slot 8, and thus the correct position of the second bevel gear 5 on the horizontal direction is ensured. In addition, because the bottom of the second bevel gear 5 contacts with the guide plate surface at the open guide slot 8 of the gear bracket 1, and the bucket 10 is good positioned on the stirring rack 11, which make the second bevel gear 5 on the upper end of the rotational shaft (the shaft of the stirring paddle 7) be in a right vertical position. As a result, the pair of bevel gears 3, 5 are maintained in a proper engagement position. When the bucket 10 is to be pulled out, one may just grips a handle on the bucket lid 6 by hand and pulls it with small force, the bucket 10 will be pulled out by an instantaneous accelerating rotation of the second bevel gear 5 with the stirring paddle 7. One skilled in the art would understand that the resistance force to be overcome when pulling out the paint bucket not only depends on the viscosity of the paints, but also the structure of the stirring paddle 7 which can be adjusted as desired.

In the present invention, the gear bracket 1 is preferably made of the plastic material. Moreover, the two bevel gears are preferably made of the plastic material such as nylon material, so as to facilitate the engagement between the bevel gears. In this case, not only the accuracy requirement for the assembly position but also the operation noise generated by the bevel gear pairs is reduced. One skilled in the art would appreciate that the bevel gears in the present invention may be made of other suitable material, such as metaformaldehyde and polycarbonate etc. However, these materials have disadvantages of higher cost and higher rigidity. Furthermore, the bevel gears may also be made of mixed rubber and plastic materials. Advantageously, for improving the abrasion resistance of the plastic bevel gears, the plastic materials are mixed with anti-attrition substance such as molybdenum disulfide and so on to decrease the friction factor of the gears. Since the driven bevel gear often need to be pulled out, and the lubricating oil on the surface would contaminate the environment. While the smooth operation and anti-attrition effects are ensured, the bevel gears in the present invention needs no lubrication during its operation, thus the foregoing issue is solved.

According to one aspect of the present invention, a stirring paddle 7 is installed on the vertical rotational shaft slidably, thus in case there are less paints in the bucket, the issues of hanging the bucket in the air or swaying due to the lifting force caused by the paddle are solved. Therefore, when stirring the paints, the stirring paddle would slide downward to the bottom of the bucket when it drives the paints upward, then the lifting and swaying of the bucket are limited. However, one skilled in the art will understand that other appropriate ways in the art also can be used to prevent such problems as to the lifting and swaying of the bucket. For example, a shaft extending from the bottom of the guide plate is provided to contact against the edge of the opening on the bucket lid.

For the convenience of installation, the vertical rotational shaft 4 may be comprised of two segments. In an embodiment, the two segments are connected together (for example) by thread. However, the two segments may also be connected together by other suitable means such as snap connection.

In the above mentioned embodiment, both of the horizontal drive shaft 2 and the vertical rotational shaft 4 are made from metal. This is because the metal has good heat dispersion performance and lower frictional coefficient when the drive shaft is installed into the plastic gear bracket 1 as well as good strength.

During the installation, as shown in Figure.7, the gear bracket 1 may be secured on the supporting shelf 12 by the bolts through the location holes 9 on the gear bracket. A plurality of gear brackets may be installed fixedly on the stirring rack in lines. On the same supporting shelf, the horizontal drive shaft 2 may be a single one, or several shafts connected together.

When the stirring rack is not in operation, when the paint in the bucket 10 is to be stirred, the vertical rotational shaft 4 on the bucket lid 6 will be inserted into the inner part of the guide slot 8 by sliding along the guide slot 8 of the gear bracket 1, and the second bevel gear 5 contacts with the first bevel gear 3, this will cause the second bevel gear 5 rotating anti-clockwise (view from the front in Figure 3) to realize the insertion of the second bevel gear 5. In case the vertical rotational shaft 4 is inserted into the innermost part of the guide slot, the first bevel gear 3 on the horizontal drive shaft 2 is well engaged with the second bevel gear 5 on the top of the vertical rotational shaft 4. If pulling out the bucket 10 for use, one just grips a handle on the bucket lid 6 by hand and pulls it out with small force, and then the second bevel gear 5 is to be disengaged in line with the stirring direction. The vertical rotational shaft 4 will come free along the guide slot 8 in the gear bracket 1, and thus the second bevel gear 5 on the vertical rotational shaft 4 disengages from the first bevel gear 3 on the horizontal drive shaft 2.

If the bucket 10 is installed on the stirring rack 11, when stirring the paints in the bucket, the motor driver may drive the horizontal drive shaft 2 on the plurality of gear brackets 1 in series, which in turn drive the plurality of first bevel gears 3 to rotate. Due to the engagement between the first bevel gear 3 on the horizontal drive shaft 2 and the second bevel gear 5 on the vertical rotational shaft 4, the stirring paddle 7 on the vertical rotational shaft 4 also begins to rotate for stirring the paints. The location pin 13 on the bucket lid 6 is blocked at the second segment 8b of the guide slot to prevent the rotation of the bucket during the stirring process. Other means for preventing the rotation may be adopted. For a stirring unit without the bucket 10 inserted into the gear bracket 1, the first bevel gear 3 will rotate independently without interfering the normal operation of the stirring rack 11. In the stirring rack having this bevel gearing device, the buckets may be inserted and pulled out at any time as desired. Moreover, the separating configuration of the bevel gears may decrease the overall height of the stirring rack effectively, and thus the package and transport costs are reduced accordingly.

These and other modifications and variations to the present disclosure may be practiced by those of ordinary skill in the art, without departing from the scope of the present disclosure, as set forth in the appended claims. Furthermore, those of ordinary skill in the art will appreciate that the foregoing description is by way of example only, and is not intended to limit the disclosure as it is described in the appended claims.

## Claims

1. A bevel gearing device suitable for a stirring rack of a tinting machine, comprising a gear bracket (1) fixedly mounted on the stirring rack; a horizontal drive shaft (2) rotationally mounted on the gear bracket (1); a first bevel gear (3) fixedly mounted on the horizontal drive shaft (2) adjacent to a side of the gear bracket (1); a vertical rotational shaft (4) with a second bevel gear (5) fixedly mounted on its upper end and a stirring paddle (7) mounted on its lower end, and the said stirring paddle (7) is, in use, placed in a paint bucket; **characterised in that** an open guide slot (8) is provided at the bottom of the gear bracket (1), the guide slot (8) includes a first segment (8a) extending perpendicularly to the horizontal drive shaft (2) and a second segment (8b) extending towards the first bevel gear (3), an angle between the first and second segment is 180°≥α≥ 160°, and the size of the guide slot (8) is designed to slidably receive the vertical rotational shaft (4), such that the second bevel gear (5) is releasably engaged with the first bevel gear (3), and the rotation direction of the first bevel gear (3) is selected such that it drives the second bevel gear to rotate into the innermost part of the guide slot (8) during the operation of the stirring rack; and the first and second bevel gears are made of plastic material.

2. The bevel gearing device according to Claim 1, wherein the first and second bevel gears are configured such that the minimum value of gear backlash thereof increases along with the increasing angle α.

3. The bevel gearing device according to Claim 2, wherein the first and second bevel gears have a modulus m=1.5∼4, the minimum value of gear backlash is in the range of 0mm∼0.3mm.

4. The bevel gearing device according to Claim 3, wherein the minimum value of gear backlash is 0mm, if α=160°; the minimum value of gear backlash is 0.3 mm, if α=180°.

5. The bevel gearing device according to Claim 1, wherein the plastic material is mixed with antifriction materials.

6. The bevel gearing device according to Claim 1, further including a reducer, and rotation speed of the horizontal drive shaft (2) is adjusted to 60∼95 rpm by the reducer.

7. The bevel gearing device according to Claim 1, wherein the width of the guide slot (8) is selected to achieve a loose fit between the guide slot (8) and the vertical rotational shaft (4).

8. The bevel gearing device according to Claim 6, wherein the width of the first segment (8a) of the guide slot is larger than that of the second segment (8b).

9. The bevel gearing device according to Claim 1, wherein the stirring paddle (7) is slidably installed on the vertical rotational shaft (4).

10. The bevel gearing device according to Claim 1, wherein the horizontal drive shaft (2) and the vertical rotational shaft (4) are made of metal material.

11. The bevel gearing device according to Claim 2, wherein the angle is 170°≥α≥160°.

12. The bevel gearing device according to Claim 10, wherein the vertical rotational shaft (4) includes two segments which are connected together via thread.

## Patentansprüche

1. Kegelradgetriebevorrichtung, geeignet für eine Rührstange einer Abtönmaschine, umfassend einen Getrieberahmen (1), der fest auf der Rührstange angebracht ist; eine horizontale Antriebswelle (2), drehbar auf dem Getrieberahmen (1) gelagert; ein erstes Kegelrad (3), fest neben einer Seite des Getrieberahmens (1) auf der horizontalen Antriebswelle (2) angebracht; eine vertikale Drehwelle (4) mit einem zweiten Kegelrad (5), das fest an ihrem oberen Ende angebracht ist, und einem Rührpaddel (7), das an ihrem unteren Ende angebracht ist, und wobei das Rührpaddel (7) im Gebrauch in einem Farbeimer platziert ist; **dadurch gekennzeichnet, dass** ein offener Führungsschlitz (8) am unteren Ende des Getrieberahmens (1) bereitgestellt ist, wobei der Führungsschlitz (8) Folgendes enthält: ein erstes Segment (8a), das sich senkrecht zu der horizontalen Antriebswelle (2) erstreckt, und ein zweites Segment (8b), das sich zu dem ersten Kegelrad (3) hin erstreckt, wobei ein Winkel zwischen dem ersten und dem zweiten Segment 180°≥α≥160° beträgt und die Größe des Führungsschlitzes (8) derart gestaltet ist, dass er die vertikale Drehwelle (4) derart gleitend aufnimmt, dass das zweite Kegelrad (5) das erste Kegelrad (3) lösbar in Eingriff nimmt, und die Drehrichtung des ersten Kegelrads (3) derart gewählt ist, dass es das zweite Kegelrad antreibt, sich während des Betriebs der Rührstange in den innersten Teil des Führungsschlitzes (8) hinein zu drehen; und wobei das erste und das zweite Kegelrad aus Kunststoffmaterial gefertigt sind.

2. Kegelradgetriebevorrichtung nach Anspruch 1, wobei das erste und das zweite Kegelrad derart konfiguriert sind, dass der Mindestwert für Getriebespiel dazwischen mit dem wachsenden Winkel α ansteigt.

3. Kegelradgetriebevorrichtung nach Anspruch 2, wobei das erste und das zweite Kegelrad einen Modul m=1,5∼4 aufweisen, wobei der Mindestwert für Getriebespiel im Bereich von 0 mm∼0,3 mm liegt.

4. Kegelradgetriebevorrichtung nach Anspruch 3, wobei der Mindestwert für Getriebespiel 0 mm beträgt, sofern α=160° ist; wobei der Mindestwert für Getriebespiel 0,3 mm beträgt, sofern α=180° ist.

5. Kegelradgetriebevorrichtung nach Anspruch 1, wobei das Kunststoffmaterial mit Antireibungsmaterialien vermischt ist.

6. Kegelradgetriebevorrichtung nach Anspruch 1, ferner ein Reduziergetriebe enthaltend, wobei die Drehzahl der horizontalen Antriebswelle (2) durch das Reduziergetriebe auf 60-95 U/min reduziert wird.

7. Kegelradgetriebevorrichtung nach Anspruch 1, wobei die Breite des Führungsschlitzes (8) ausgewählt ist, um einen losen Sitz zwischen dem Führungsschlitz (8) und der vertikalen Drehwelle (4) zu erzielen.

8. Kegelradgetriebevorrichtung nach Anspruch 6, wobei die Breite des ersten Segments (8a) des Führungsschlitzes größer ist als die Breite des zweiten Segments (8b).

9. Kegelradgetriebevorrichtung nach Anspruch 1, wobei das Rührpaddel (7) gleitbar auf der vertikalen Drehwelle (4) eingebaut ist.

10. Kegelradgetriebevorrichtung nach Anspruch 1, wobei die horizontale Antriebswelle (2) und die vertikale Drehwelle (4) aus metallischem Material gefertigt sind.

11. Kegelradgetriebevorrichtung nach Anspruch 2, wobei der Winkel 170°≥α≥160° beträgt.

12. Kegelradgetriebevorrichtung nach Anspruch 10, wobei die vertikale Drehwelle (4) zwei Segmente enthält, die über ein Gewinde miteinander verbunden sind.

## Revendications

1. Dispositif d'engrenage conique convenant à une crémaillère d'agitation d'une machine de teinture, comprenant une console de roue (1) monté de manière fixe sur la crémaillère d'agitation ; un arbre d'entraînement horizontal (2) monté en rotation sur la console de roue (1) ; une première roue conique (3) montée de manière fixe sur l'arbre d'entraînement horizontal (2) adjacente à un côté de la console de roue (1) ; un arbre de rotation vertical (4) avec une seconde roue conique (5) montée de manière fixe sur son extrémité supérieure et une pale d'agitation (7) montée sur son extrémité inférieure, et ladite pale d'agitation (7) est, en utilisation, placée dans un pot de peinture ; **caractérisé en ce qu'**une fente de guidage ouverte (8) est prévue au fond de la console de roue (1), la fente de guidage (8) comprend un premier segment (8a) s'étendant perpendiculairement à l'arbre d'entraînement horizontal (2) et un second segment (8b) s'étendant vers la première roue conique (3), un angle entre les premier et second segments est de 180° ≥ α ≥ 160°, et la taille de la fente de guidage (8) est conçue pour recevoir par coulissement l'arbre de rotation vertical (4), de sorte que la seconde roue conique (5) se met en prise de manière libérable avec la première roue conique (3), et le sens de rotation de la première roue conique (3) est sélectionné de sorte qu'elle entraîne la seconde roue conique pour tourner dans la partie la plus interne de la fente de guidage (8) pendant le fonctionnement de la crémaillère d'agitation ; et les première et seconde roues coniques sont constituées de matière plastique.

2. Dispositif d'engrenage conique selon la revendication 1, dans lequel les première et seconde roues coniques sont configurées de sorte que la valeur minimale de leur jeu d'entredent augmente avec l'angle α croissant.

3. Dispositif d'engrenage conique selon la revendication 2, dans lequel les première et seconde roues coniques ont un module m = 1,5 à 4, la valeur minimale du jeu d'entredent se trouve dans la plage de 0 mm à 0,3 mm.

4. Dispositif d'engrenage conique selon la revendication 3, dans lequel la valeur minimale du jeu d'entredent est de 0 mm, si α = 160° ; la valeur minimale du jeu d'entredent est de 0,3 mm, si α = 180°.

5. Dispositif d'engrenage conique selon la revendication 1, dans lequel la matière plastique est mélangée à des matériaux antifriction.

6. Dispositif d'engrenage conique selon la revendication 1, comprenant en outre un réducteur, et la vitesse de rotation de l'arbre d'entraînement horizontal (2) est réglée à 60 à 95 tours/min par le réducteur.

7. Dispositif d'engrenage conique selon la revendication 1, dans lequel la largeur de la fente de guidage (8) est sélectionnée pour accomplir un ajustement libre entre la fente de guidage (8) et l'arbre de rotation vertical (4).

8. Dispositif d'engrenage conique selon la revendication 6, dans lequel la largeur du premier segment (8a) de la fente de guidage est plus grande que celle du second segment (8b).

9. Dispositif d'engrenage conique selon la revendication 1, dans lequel la pale d'agitation (7) est installée en coulissement dans l'arbre de rotation vertical (4).

10. Dispositif d'engrenage conique selon la revendication 1, dans lequel l'arbre d'entraînement horizontal (2) et l'arbre de rotation vertical (4) sont constitués de matériau métallique.

11. Dispositif d'engrenage conique selon la revendication 2, dans lequel l'angle est de 170°≥α≥160°.

12. Dispositif d'engrenage conique selon la revendication 10, dans lequel l'arbre de rotation vertical (4) inclut deux segments qui sont raccordés ensemble par l'intermédiaire d'un filet.
